# EUROPÄISCHE PATENTSCHRIFT

(11) **EP 1 413 487 B1**
(45) Veröffentlichungstag und Bekanntmachung des Hinweises auf die Patenterteilung: **01.03.2006**
(21) Anmeldenummer: 03015509.7
(22) Anmeldetag: 09.07.2003
(51) Int. Cl.: B60R 21/16

(54) **Gassack-Schutzeinrichtung**
Airbag protection device
Dispositif de protection à sac gonflable

(30) Priorität: 09.08.2002 DE 20212337 U
(43) Veröffentlichungstag der Anmeldung: 28.04.2004
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Kitzhofer, Thomas

(56) Entgegenhaltungen:
- EP-A- 0 917 995
- EP-A- 1 022 198
- WO-A-02/14115
- GB-A- 2 306 409
- US-B1- 6 322 099
- PATENT ABSTRACTS OF JAPAN vol. 1995, no. 01, 28. Februar 1995 (1995-02-28) -& JP 06 286570 A (HINO MOTORS LTD), 11. Oktober 1994 (1994-10-11)

## Beschreibung

Die Erfindung betrifft eine Gassack-Schutzeinrichtung.

Gassäcke sollen sehr schnell aufgeblasen werden und dann, wenn der Insasse in sie hineintaucht, auch eine gewisse Nachgiebigkeit besitzen. Diese zwei Eigenschaften widersprechen sich eigentlich. Deshalb sind ventilähnliche Ausströmöffnungen an der Gassackwand angedacht, die ab Erreichen eines vorbestimmten Drucks Gas entweichen lassen.

Aus der JP 06286570 ist eine solche Gassack-Schutzeinrichtung entsprechend den Merkmalen des Oberbregriffs des Ansprüchs 1 bekannt.

Die Erfindung schafft eine Gassack-Schutzeinrichtung mit einem Gassack, bei dem die Steuerung des Gassackinnendrucks lastabhängig erfolgt, insoweit, als zunächst nur eine geringe Entlastung des Gassackinnendrucks erfolgt, um anschließend bei zunehmender Eintauchtiefe des Insassen in den Gassack den Innendruck gesteuert anzupassen und schließlich sogar ein Entweichen des Gases ab einem bestimmten Druck zuzulassen.

Die erfindungsgemäße Gassack-Schutzeinrichtung umfaßt einen Gassack, der eine Außenwand aus einem ersten Material aufweist, wobei die Außenwand wenigstens eine Ausströmöffnung hat. Die Gassack-Schutzeinrichtung umfaßt ferner eine Membran aus einem dehnbaren, zweiten Material, das an der Außenwand befestigt ist und die Ausströmöffnung im nicht vollständig aufgeblasenen Zustand des Gassacks bedeckt. Darüber hinaus ist eine außerhalb des Gassacks vorgesehene Einrichtung zum Zerstören der Membran vorgesehen. Die Einrichtung und der Gassack sind so weit voneinander entfernt angeordnet, daß die Membran erst ab Erreichen eines vorbestimmten Gassackinnendrucks auf die Einrichtung trifft und zerstört wird. Bei der erfindungsgemäßen Gassack-Schutzeinrichtung wird, bevor die Membran zerstört wird und ein großer Ausströmquerschnitt zur Verfügung steht, zuerst der Innendruck geringfügig dadurch abgebaut, daß die Membran sich dehnt und ein größeres Volumen zur Verfügung steht. Dies erlaubt es, die Membran beispielsweise wie einen an der Ausströmöffnung angesetzten elastischen Ballon wirken zu lassen, der ein zusätzliches, variables Volumen zur Verfügung stellt. Der Innendruck kann sich dabei an die Belastung von außen in gewisser Hinsicht anpassen. Erst ab Erreichen eines bestimmten, sehr hohen Drucks trifft die Membran auf die Einrichtung, um zerstört zu werden.

Eine Ausführungsform der Erfindung sieht vor, daß die Membran sich vor Erreichen der Einrichtung ballonartig nach außen vorwölbt.

Im gefalteten Zustand des Gassacks kann die Membran aber im Inneren des Gassacks angeordnet sein und sich beim Entfalten durch die Austrittsöffnung nach außen stülpen. Damit wird die im Vergleich zur Außenwand empfindlichere Membran beim Einbau z.B. in ein Modulgehäuse geschützt. Darüber hinaus wird die Membran, solange sie sich nicht durch die Ausströmöffnung nach außen stülpt, nicht nennenswert gedehnt, so daß ein nur durch die Außenwand definiertes Volumen des Gassacks in der anfänglichen Aufblasphase zur Verfügung steht, was den Aufblasvorgang beschleunigt. Erst später, wenn der Gassack sich so weit aufgeblasen hat, daß er eine Rückhaltewirkung ausübt, kann dann die Membran in Funktion treten, indem sie sich nach außen stülpt.

Das Material der Membran ist so gewählt, daß sie im zerstörten Zustand den wirksamen Ausströmquerschnitt definiert, daß bedeutet; sie wird nicht komplett zerstört, sondern es bleibt beispielsweise noch ein ringartiger Abschnitt im Bereich der Ausströmöffnung stehen, der die Ausströmöffnung zusammenzieht und so den wirksamen Ausströmquerschnitt lastabhängig verändert, vorzugsweise reversibel verändert.

Dies kann beispielsweise dadurch erzielt werden, daß die Membran im zerstörten Zustand so dehnbar ist, daß sie abhängig vom Innendruck den wirksamen Ausströmquerschnitt vergrößert oder verkleinert.

Vorzugsweise ist die Einrichtung zum Zerstören der Membran an der Innenseite eines Fahrzeuglenkrads vorgesehen, z.B. indem sie als eine Art.Dorn ausgeführt ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf den Fahrzeuginnenraum im Bereich des Fahrers, die die Gassack-Schutzeinrichtung nach der Erfindung vor dem Eintauchen des Fahrers und im fast vollständig aufgeblasenen Zustand zeigt,
- Figur 2 eine Figur 1 entsprechende Ansicht mit der Gassack-Schutzeinrichtung zu Beginn des Eintauchvorgangs des Insassen,

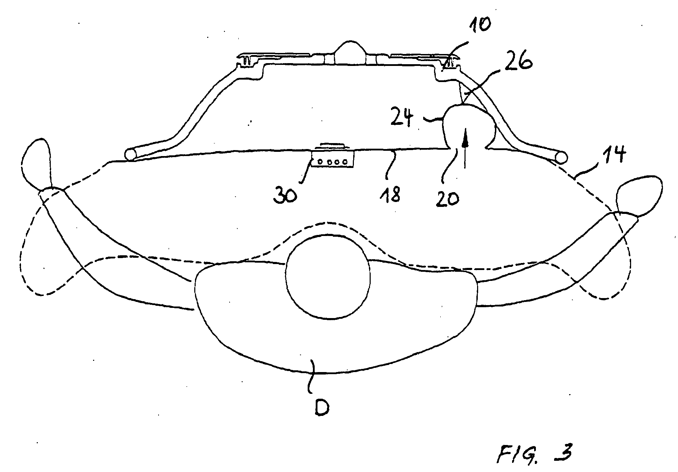

- Figur 3 eine Figur 1 entsprechende Ansicht mit der Gassack-Schutzeinrichtung bei noch weiter eingetauchtem Insassen, kurz vor der Zerstörung der Membran,
- Figur 4 eine Figur 1 entsprechende Ansicht mit der Gassack-Schutzeinrichtung bei zerstörter Membran und
- Figur 5 eine vergrößerte Schnittansicht des bei der erfindungsgemäßen Gassack-Schutzeinrichtung eingesetzten Gassacks im Bereich der Ausströmöffnung.

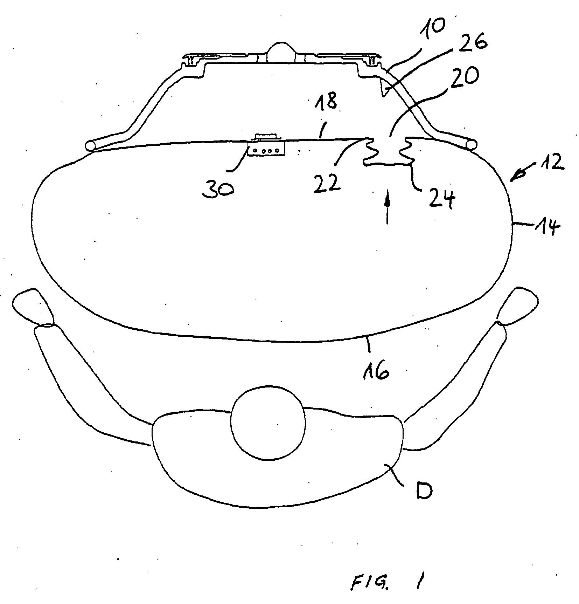

In Figur 1 ist eine Gassack-Schutzeinrichtung für den Fahrer D eines Fahrzeugs dargestellt. Die Schutzeinrichtung ist vollständig in ein Lenkrad 10 integriert und umfaßt einen Gassack 12 mit einer Außenwand 14 aus Gewebematerial, der eine dem Insassen D zugewandte Vorderseite 16 und eine dem Lenkrad 10 zugewandte Rückseite 18 besitzt. Im Bereich der Rückseite 18 hat die Außenwand 14 zumindest eine Ausströmöffnung 20. Am Rand 22 der Ausströmöffnung 20 ist eine ballonartige Membran 24 aus dehnbarem, vorzugsweise elastomeren Material befestigt, die in dem in Figur 1 gezeigten Zustand die Ausströmöffnung 20 bedeckt und schließt.

Zur Schutzeinrichtung gehört auch eine Einrichtung 26 zum Zerstören der Membran 24, die die Form eines dornartigen, der Rückseite 18 zugewandten Fortsatzes hat und die auf der Innenseite des Lenkrads 10, z.B. im Bereich des Übergangs einer Speiche zur Nabe sitzt. Die Einrichtung 26 kann beispielsweise ein Fortsatz des Lenkradskeletts sein.

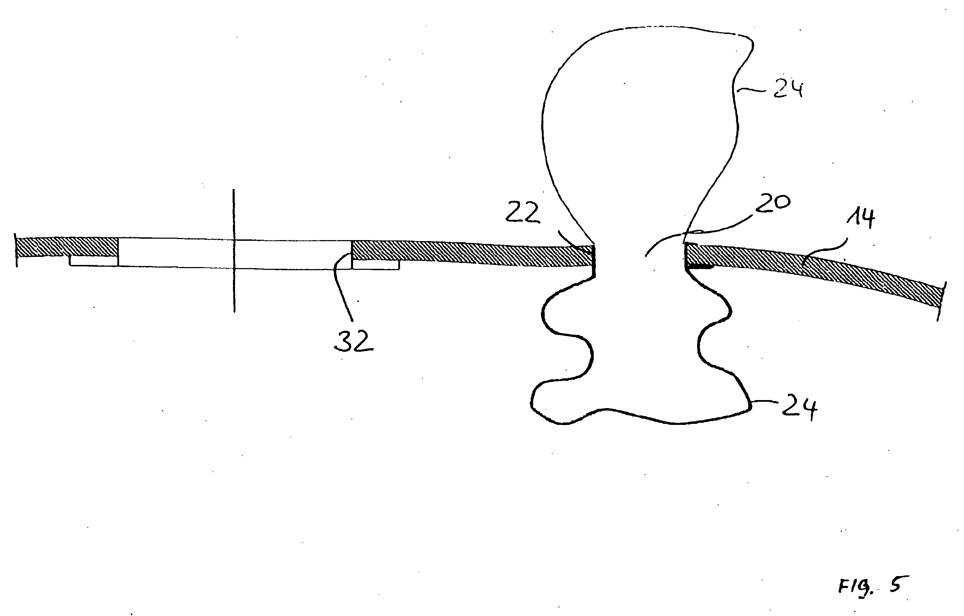

Im Bereich des sogenannten Einblasmundes des Gassacks 12 ragt ein Gasgenerator 30 in dessen Inneres. Der Einblasmund ist in Figur 5 mit dem Bezugszeichen 32 versehen.

In Figur 5 ist auch zu erkennen, daß die Membran 24 im Bereich des Randes 22 in das Innere der Ausströmöffnung 20 ragt und, wie auf der rechten Seite angedeutet, auch einen Abschnitt haben kann, der innenseitig an der Außenwand 14 anliegt und dort befestigt ist. Der Bereich der Membran 24, der unmittelbar an der Außenwand 14 befestigt ist, ist ringförmig geschlossen.

Figur 1 zeigt einen Zustand des Gassacks 12, wenn dieser fast vollständig aufgeblasen und entfaltet ist. Der Insasse D ist aber noch nicht in den Gassack 12 eingetaucht. In diesem Zustand ist die Membran 24 noch immer einwärts der Ausströmöffnung 20 angeordnet und dichtet das Innere des Gassacks ab.

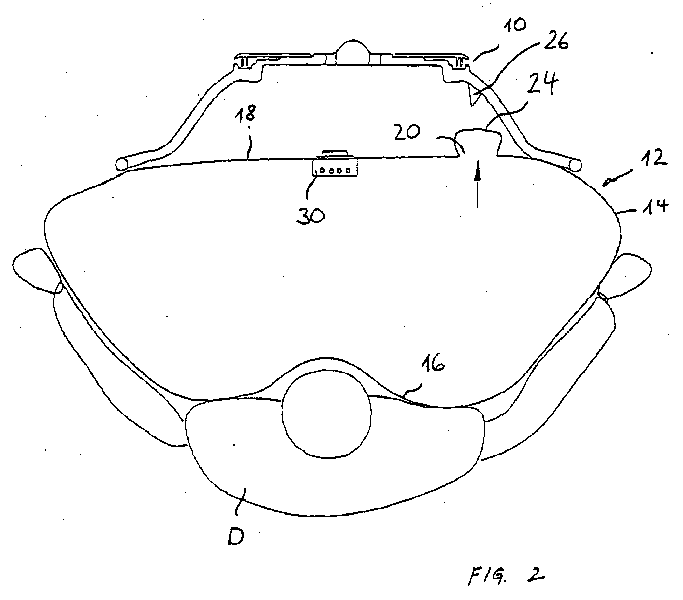

Wenn der Insasse beginnt, in den Gassack einzutauchen (Figur 2) erhöht sich der Gassackinnendruck, und die Membran 24 stülpt sich durch die Ausströmöffnung 20 nach außen. Damit wird dem Gassack ein größeres Volumen gegeben, und der Innendruck kann etwas abnehmen.

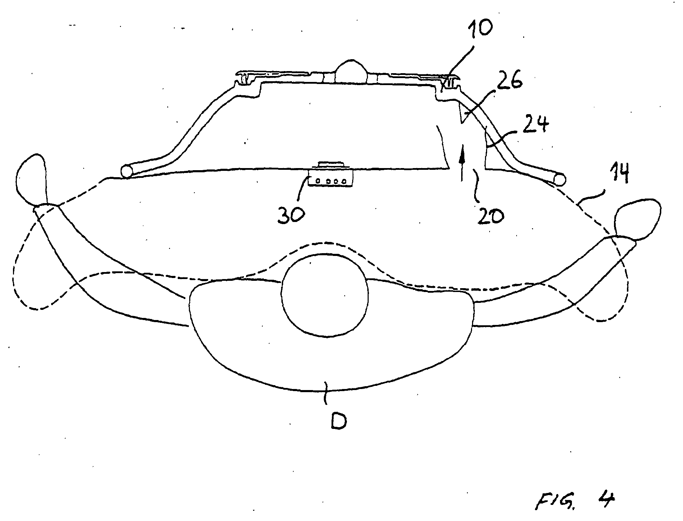

Wenn der Fahrer D tiefer in den Gassack 12 eintaucht, erhöht sich der Gassackinnendruck, und die Membran wölbt sich weiter ballonartig nach außen vor, so daß ein gewisser Druckausgleichsraum zur Verfügung steht. Die Membran 24 gelangt näher zur Einrichtung 26 und wird schließlich (Figur 4) zerstört. Dieser Zustand entspricht einem gewissen maximalen Gassackinnendruck, der vorbestimmt werden kann.

Im zerstörten Zustand der Membran kann diese den wirksamen Ausströmquerschnitt ggf. weiter beeinflussen, nämlich abhängig vom Innendruck vergrößern oder verkleinern. Dies wäre beispielsweise dann möglich, wenn die Membran 24 im Bereich ihrer Befestigung an der Außenwand 14 unzerstört bleibt und wie ein geschlossener Ring aus elastomerem Material wirkt, der die Ausströmöffnung 20 auch zusammenziehen kann.

Die zuvor erwähnten Vorteile können auch erreicht werden, wenn die Membran 24 nicht an der Gassackwand befestigt ist, sondern beispielsweise in einem Gassack-Modulgehäuse an dessen Rückwand im Bereich einer gehäuseseitigen, rückseitigen Ausströmöffnung. Bei dieser Ausführungsform wird quasi die Rückseite 18 des Gassacks durch das Aufnahmegehäuse für den Gassack 12 ersetzt.

## Patentansprüche

1. Gassack-Schutzeinrichtung, mit
einem Gassack (12), der eine Außenwand (14) aus einem ersten Material aufweist,
wobei die Außenwand (14) wenigstens eine Ausströmöffnung (20) hat,
einer Membran (24) aus einem dehnbaren zweiten Material, das an der Außenwand (14) befestigt ist und die Ausströmöffnung (20) im nicht vollständig aufgeblasenen Zustand des Gassacks (12) bedeckt, **dadurch gekennzeichnet, dass** außerhalb des Gassacks (12) eine Einrichtung (26) zum Zerstören der Membran (24), vorgesehen ist,
wobei der Gassack (12) und die Einrichtung (26) soweit voneinander entfernt angeordnet sind, daß die Membran (24) erst ab Erreichen eines vorbestimmten Gassackinnendrucks auf die Einrichtung (26) trifft.

2. Gassack-Schutzeinrichtung nach Anspruch 1, **dadurch gekennzeichnet, daß** die Membran (24) sich vor Erreichen der Einrichtung (26) ballonartig nach außen vorwölbt.

3. Gassack-Schutzeinrichtung nach Anspruch 1 oder 2, **dadurch gekennzeichnet, daß** die Membran (24) im gefaltetem Zustand des Gassacks (12) im Inneren des Gassacks (12) angeordnet ist und sich beim Aufblasen durch die Austrittsöffnung (20) nach außen stülpt.

4. Gassack-Schutzeinrichtung nach einem der vorhergehenden Ansprüche, **dadurch gekennzeichnet, daß** das Material der Membran (24) so ausgebildet ist, daß sie im zerstörten Zustand den wirksamen Ausströmquerschnitt definiert.

5. Gassack-Schutzeinrichtung nach Anspruch 4, **dadurch gekennzeichnet, daß** die Membran (24) im zerstörten Zustand so dehnbar ist, daß sie abhängig vom Innendruck den wirksamen Ausströmquerschnitt vergrößert oder verkleinert.

6. Gassack-Schutzeinrichtung nach einem der vorhergehenden Ansprüche, **dadurch gekennzeichnet, daß** die Einrichtung (26) zum Zerstören der Membran (24) an der Innenseite des Lenkrads (10) vorgesehen ist.

## Claims

1. A gas bag protection device, comprising
a gas bag (12), which has an outer wall (14) made of a first material,
the outer wall (14) having at least one outflow opening (20),
a membrane (24) made of an extensible second material, which is fastened to the outer wall (14) and covers the outflow opening (20) in the not fully inflated state of the gas bag (12), **characterized in that**
a means (26) for destroying the membrane (24) is provided outside the gas bag (12),
the gas bag (12) and the means (26) being arranged spaced so far apart from each other that the membrane (24) meets the means (26) only after a predetermined internal pressure of the gas bag is reached.

2. The gas bag protection device according to Claim 1, **characterized in that** the membrane (24) bulges outwards like a balloon before reaching the means (26).

3. The gas bag protection device according to Claim 1 or 2, **characterized in that** in the folded state of the gas bag (12), the membrane (24) is arranged inside the gas bag (12) and turns outwards through the outlet opening (20) during inflation.

4. The gas bag protection device according to any of the preceding claims, **characterized in that** the material of the membrane (24) is configured such that in the destroyed state it defines the effective outflow cross-section.

5. The gas bag protection device according to Claim 4, **characterized in that** the membrane (24) in the destroyed state is so extensible that it enlarges or reduces the effective outflow cross-section as a function of the internal pressure.

6. The gas bag protection device according to any of the preceding claims, **characterized in that** the means (26) for destroying the membrane (24) is provided on the inside of the steering wheel (10).

## Revendications

1. Dispositif de protection à coussin à gaz, comportant
un coussin à gaz (12) qui présente une paroi extérieure (14) en un premier matériau,
la paroi extérieure (14) ayant au moins un orifice d'échappement (20),
une membrane (24) en un deuxième matériau extensible qui est fixé sur la paroi extérieure (14) et qui couvre l'orifice d'échappement (20) à l'état non entièrement gonflé du coussin à gaz (12), **caractérisé en ce qu'**il est prévu à l'extérieur du coussin à gaz (12) un moyen (26) permettant de détruire la membrane (24),
le coussin à gaz (12) et le moyen (26) étant agencés si loin l'un de l'autre que la membrane (24) ne touche le moyen (26) qu'après avoir atteint une pression intérieure prédéterminée du coussin à gaz.

2. Dispositif de protection à coussin à gaz selon la revendication 1, **caractérisé en ce que** la membrane (24) se bombe vers l'extérieur à la manière d'un ballon avant d'atteindre le moyen (26).

3. Dispositif de protection à coussin à gaz selon la revendication 1 ou 2, **caractérisé en ce qu'**à l'état plié du coussin à gaz (12), la membrane (24) est agencée à l'intérieur du coussin à gaz (12) et lors du gonflage, elle se retourne vers l'extérieur à travers l'orifice de sortie (20).

4. Dispositif de protection à coussin à gaz selon l'une des revendications précédentes, **caractérisé en ce que** le matériau de la membrane (24) est réalisé de telle sorte qu'à l'état détruit, elle définit la section transversale effective d'échappement.

5. Dispositif de protection à coussin à gaz selon la revendication 4, **caractérisé en ce qu'**à l'état détruit, la membrane (24) est si extensible qu'elle agrandit ou réduit la section transversale effective d'échappement en fonction de la pression intérieure.

6. Dispositif de protection à coussin à gaz selon l'une des revendications précédentes, **caractérisé en ce que** le moyen (26) de destruction de la membrane (24) est prévu sur la face intérieure du volant de direction (10).
